(19) Europäisches Patentamt
European Patent Office
Office européen des brevets

(11) Publication number: **0 239 079 A2**

(12) **EUROPEAN PATENT APPLICATION**

(21) Application number: **87104341.0**

(51) Int. Cl.⁴: **B01J 20/32**

(22) Date of filing: **24.03.87**

(30) Priority: **27.03.86 JP 69529/86**

(43) Date of publication of application: **30.09.87 Bulletin 87/40**

(84) Designated Contracting States: **DE FR GB**

(71) Applicant: **OLYMPUS OPTICAL CO., LTD.**
**43-2, 2-chome, Hatagaya Shibuya-ku**
**Tokyo 151(JP)**

(72) Inventor: **Nakamura, Makoto**
**1146, Kunugida-machi§Hachioji-shi**
**Tokyo(JP)**
Inventor: **Kumazawa, Toshiaki**
**1-15-13, Koyasu-machi,§Hachioji-shi**
**Tokyo(JP)**
Inventor: **Kogure, Eriko**
**3-16-12, Oyama,§Sagamihara-shi**
**Kanagawa-ken,(JP)**

(74) Representative: **Ruschke, Hans Edvard et al**
**Patentanwälte Dipl.-Ing. Olaf Ruschke**
**Dipl.-Ing. Hans E. Ruschke Dipl,-Ing. Jürgen Rost Dipl.-Chem. Dr. U. Rotter**
**Pienzenauerstrasse 2**
**D-8000 München 80(DE)**

(54) **Insoluble chemical composite material.**

(57) An insoluble chemical composite material has a silicon dioxide-based carrier material, and polyethyleneimine bonded to the carrier material by means of a silane coupling agent which is directly chemically bonded to the surface of the carrier material.

EP 0 239 079 A2

# Insoluble chemical composite material

The present invention relates to an insoluble chemical composite material and, more particularly, to a composite material suitable as a biocatalytic or affinity-chromatographic carrier.

Silica gel, glass or silica containing silicon dioxide as a major constituent is used as an enzyme-immobilized carrier material for a biocatalyst, especially a bioreactor or affinity chromatography. The silicon dioxide-based carrier material can be formed into various shapes such as a porous powder member, a fiber, and a tube.

When the conventional silicon dioxide-based carrier is used for a bioreactor or affinity chromatography, a biocatalyst or an affinity-chromatographic ligand must be bonded to the surface of the carrier. U.S. Patent No. 3,652,761 describes to bond an antibody to the surface of the silicon dioxide-based carrier by means of a silane coupling agent. In another example described in "Adv. Chromatogr.", Larsson, P.O., Glad, M., Hasson, L., Mansson, M.O., Ohlson, S., & Mosback, K., 21, 41 -85 (1983), a silane coupling agent containing an epoxy group is bonded to the surface of silica gel, and a ligand is bonded to an active terminal of the silane coupling agent bonded to silica gel, with or without modification of the active terminal.

In general, a bioreactor is used in an aqueous solution, and affinity chromatography is performed using an aqueous solution. The pH values of these solutions generally fall within the range of 2 to 11. Silicon dioxide has low moisture resistance and low alkali resistance and can only be used within the pH range up to 10. Even if a silane coupling agent is bonded to silicon dioxide, high moisture resistance cannot be obtained in the high alkaline range of pH 11 to pH 12. For this reason, when the conventional carrier is used as a carrier for a bioreactor or affinity chromatography, the efficiencies of the carrier are degraded within a relatively short period of time.

It is, therefore, an object of the present invention to provide an insoluble chemical composite material having high moisture resistance and high alkali resistance.

According to the present invention, there is provided an insoluble chemical composite material, comprising:

a silicon dioxide-based carrier material; and

polyethyleneimine bonded to the carrier material by means of a silane coupling agent which is directly chemically bonded to the surface of the carrier material.

According to a first aspect of the present invention, the silane coupling agent is directly chemically bonded to polyethyleneimine.

According to a second aspect of the present invention, the silane coupling agent is bonded to polyethyleneimine through a bridging agent.

A method of manufacturing the above composite material and a material prepared by bonding a biochemical to polyethyleneimine in the above composite material fall within the scope of the present invention.

This invention can be more fully understood from the following detailed description when taken in conjunction with the accompanying drawings, in which:

Fig. 1 is a graph showing pH stability of conventional γ-aminopropyltriethoxysilane-bonded glass particles;

Fig. 2 is a graph showing pH stability of a polyethyleneimine-introduced glass particle according to the present invention;

Fig. 3 is a chromatogram obtained by applying a composite material of the present invention to affinity chromatography; and

Figs. 4 and 5 are respectively graphs showing stability of the composite material of the present invention together with a comparative example.

As described above, the chemical composite material according to the present invention is prepared by introducing polyethyleneimine to the surface of a silicon dioxide-based carrier material by using a silane coupling agent as a bonding means. The silicon dioxide-based carrier material may be any material containing silicon dioxide as a major constituent (50% or more of silicon dioxide). The carrier material includes silica gel or silica-based glass in the form of a porous particle, a fiber, or a tube.

Polyethyleneimine used in the present invention is represented by the general formula:

However, the polyethyleneimine used in the invention is not a linear polymer, but is cross-linked at imino and/or amino groups. The average molecular weight of the polyethyleneimine preferably falls within the range between about 30,000 and 80,000. By using polyethyleneimine having such a high molecular weight, the content of the imino and amino groups added per unit area of the silicon dioxide-based carrier material can be increased. Therefore, the content of the biochemical such as a ligand bonded to the imino and amino groups is increased. Such polyethyleneimine is commercially available.

When the polyethyleneimine is introduced to the silicon dioxide-based carrier material, the surface of the carrier material is first treated with a silane coupling agent. A silane coupling agent containing an epoxy group (an epoxy-functional silane coupling agent) and a silane coupling agent described in U.S. Patent No. 3,652,761 can be used. The silane coupling agent described in the above U.S. patent is represented by the following general formula:

$(Y'R')_nSiR_{4-n}$

wherein Y' is a member selected from the group consisting of amino, carbonyl, carboxy, isocyano, diazo, isothiocyano, nitroso, sulfhydryl, and halocarbonyl; R is a member selected from the group consisting of lower alkoxy, phenoxy, and halo; R' is a member selected from the group consisting of lower alkyl, lower alkylphenyl, and phenyl; and n is an integer having a value of 1 to 3. In the present invention, a vinyl group-containing silane coupling agent may also be used.

Examples of the silane coupling agent are vinyltrichlorosilane, vinyltris ($\beta$-methoxyethoxy)silane, vinyltriethoxysilane, vinyltrimethoxysilane, $\gamma$-methacryloxypropyltrimethoxysilane, N-$\beta$-(aminoethyl)-$\gamma$-aminopropyltrimethoxysilane, N-$\beta$-(aminoethyl)-$\gamma$-aminopropylmethyldimethoxysilane, $\gamma$-aminopropyltriethyoxysilane, N-phenyl-$\gamma$-aminopropyltrimethoxysilane, $\gamma$-mercaptopropyltrimethoxysilane, $\gamma$-chloropropyltrimethoxysilane, $\beta$-(3,4-epoxycyclohexyl)ethyltrimethoxysilane, $\gamma$-glycidoxypropyltrimethoxysilane, and $\gamma$-glycidoxypropylmethyldiethoxysilane. Carboxyl-functional silane coupling agent can be prepared by reacting an amino-functional silane coupling agent with succinic anhydride according to a conventional manner. The most preferable silane coupling agents are amino-, carboxyl-, and epoxy-functional silane coupling agents.

A treatment with a silane coupling agent can be preformed according to a technique described in U.S. Patent No. 3,652,761. For example, a carrier material is cleaned and dried, and the dried material is dipped in a solution (0.1 to 10 wt.% concentration) obtained by dissolving a silane coupling agent in an organic solvent (e.g., toluene, benzene, or xylene) which does not react with the silane coupling agent. The reaction is performed preferably under reflux conditions. If an epoxy-functional silane coupling agent is used, the treatment at too high a temperature must be avoided, and the treatment is normally performed at room temperature.

The polyethyleneimine is then introduced to the carrier material treated with the silane coupling agent. If an epoxy-functional silane coupling agent has been used, the epoxy group strongly reacted with the imino and/or amino groups and the polyethyleneimine can therefore be directly and convalently bonded to the carrier material. More specifically, the carrier material treated with the epoxy-functional silane coupling agent is reacted with an aqueous solution of the polyethyleneimine (its concentration is 0.03 to 10%) at a temperature of 0°C to 100°C for 0.1 to 1 hour. Thus, the polyethyleneimine is introduced to the carrier material through the silane coupling agent.

If a silane coupling agent other than the epoxy-functional silane coupling agent, such as an amino-, carboxyl or vinyl-functional agent, in order to facilitate the reaction with polyethyleneimine, before the polyethyleneimine is added to the carrier material, the selected silane coupling agent is first reacted with a bridging or linking agent which can react with the silane coupling agent and then with polyethyleneimine. Examples of the cross-linking agent for the amino-functional silane coupling agent are dialdehyde compounds such as glutaraldehyde, and examples of the linking agent for the carboxyl-functional silane coupling agent are carbodiimides. A bisepoxide compound (e.g., 1, 4-butanediol diglycidyl ether, chloromethyloxirane) can be used for either an amino-or carboxyl-functional silane coupling agent. Linking reaction can be performed such that a linking agent solution is reacted with the silane coupling agent bonded to the carrier material at a temperature of 0°C to 100°C for 0.1 to 6 hours. The amount of the linking agent used is at least a stoichiometric amount of functional groups (amino groups, carboxyl groups) contained in the silane coupling agent and involving the reaction with the linking agent. The carrier material treated with the linking agent can be reacted with polyethyleneimine in the same manner as described above. Further, when the vinyl-functional silane coupling agent has been bonded to the carrier material, the vinyl group of the coupling agent can be reacted with a polymerizable monomer (linking agent) having a polymerizable unsaturated bond, such as methacrylic acid, according the following scheme:

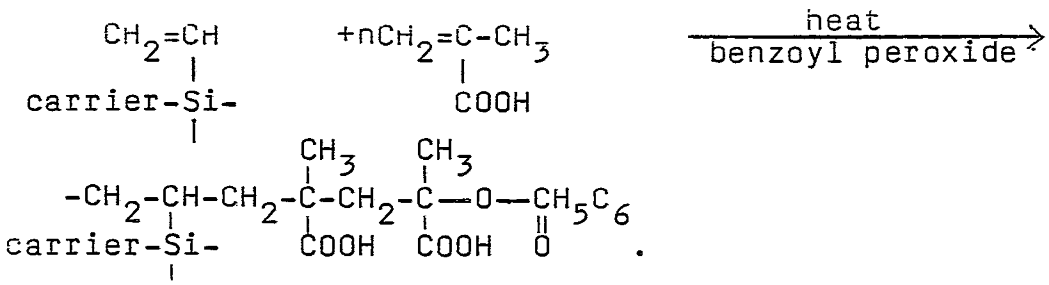


The free carboxyl group in the thus obtained carrier is then reacted with carbodiimide (RN=C=NR), and the carbodiimidized carrier is reacted with the polyethyleneimine.

The polyethyleneimine-containing silicon dioxide-based carrier material thus prepared has high moisture resistance and high alkali resistance.

U.S. Patent No. 4,540,486 describes a chromatographic column filler prepared such that polyethyleneiminopropyltrimethoxysilane is bonded to the surface of silica gel. The average molecular weight of the polyethyleneimino group in the silane coupling agent used in this prior art patent is 400 to 1,800, and the polyethyleneimino group is not cross-linked. According to the present invention, cross-linked polyethyleneimine having a high molecular weight of 30,000 to 80,000 is used and introduced to the carrier surface through the silane coupling agent. The polyethyleneimine is bonded to the silane coupling agent at many points, thus greatly improving moisture resistance and alkali resistance.

In the present invention, a biochemical containing amino acid, nucleic acid and/or saccharide, such as an enzyme, an antibody, an antigen, a DNA, an RNA, peptide, a virus, a bacterium, and a microorganism, can be bonded to the surface of the chemical composite material utilizing a reactivity of imino and/or amino groups of the polyethyleneimine. In this case, the polyethyleneimine-containing carrier can be reacted first with, for example, a dialdehyde compound (e.g., glutaraldehyde) or diepoxide compound (e.g., 1,4-butanedioldiglycidyl ether or chloromethyloxirane) to improve the reactivity with the biochemical. Specifically the follwing techniques can be utilized to bond the biochemical ( Ⓑ ) to the composite material ( Ⓒ ) of the invention.

(1) Bonding using a bisimide ester according to the following scheme:

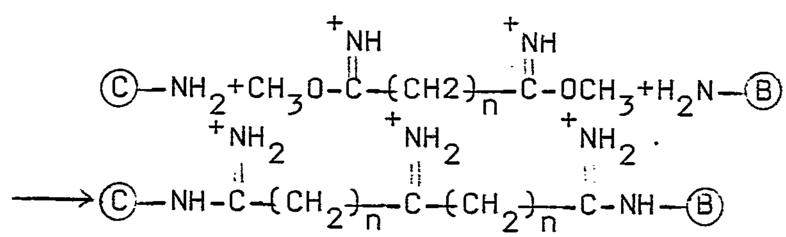

This technique is described in Hand, E.S and Jencks, W.P., J. Am. Chem. Soc., 84, 3505 (1962).

(2) Bonding using a diisocyanate according to the following scheme:

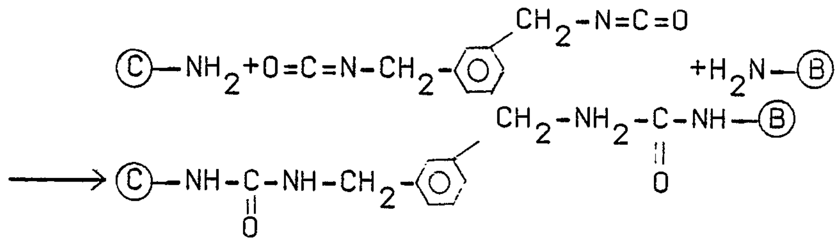

This technique is described in Linkhite, V. and Sehon, A. "Methods in Immunology and Immunochemistry", Vol. 1, p150 (1967) (Academic Press, New York).

(3) Bonding using glutaraldehyde according to the following scheme:

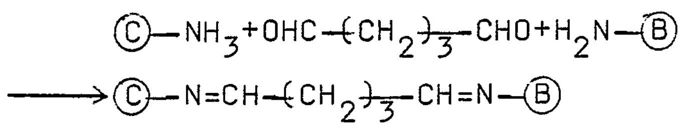

This technique is described in Monson, P, Puzo, G and Mazorguil, H., Biochimie, 57, 1281 (1975).

(4) Bonding using a mercaproalkylimidate according to the following scheme:

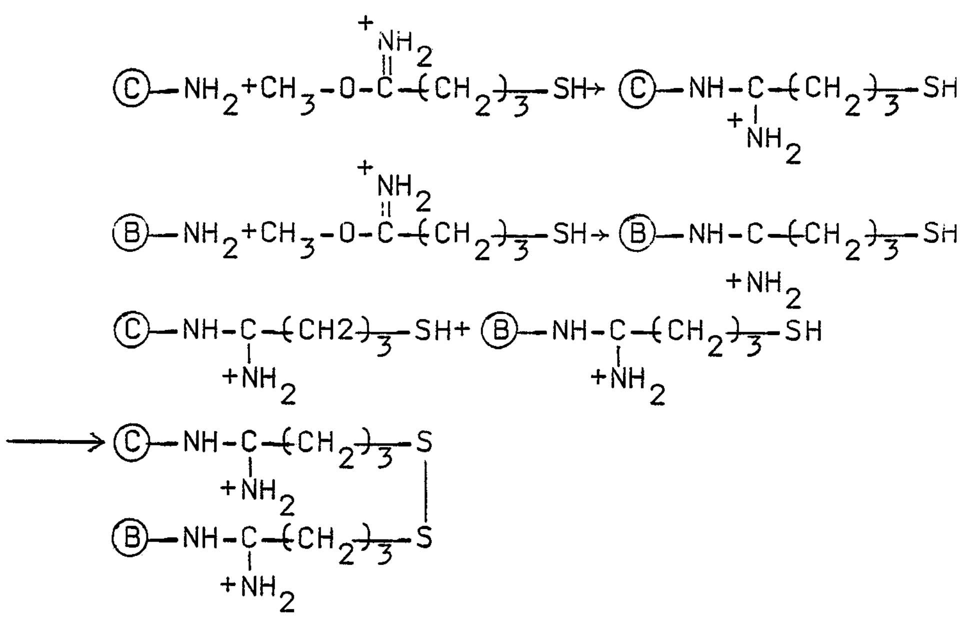

This technique is described in Iraut, R.R., Kenney, J.W., Protein Crosslinking (Plenum Pub. Co., New York, 1977).

(5) Bonding using m-maleimidobenzoyl-N-hydroxysuccinimide according to the following scheme;

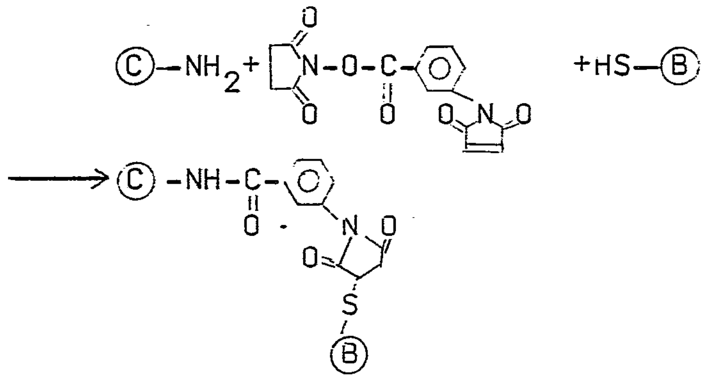

This technique is described in S. Ishiguro, Biochemical Experiment (1978).

(b) Bonding using an expoxide such as 1, 4-butandiol diglycidyl either or chloromthyloxirane.

This technique can be utilized to bond Ⓒ—$NH_2$ with

Ⓑ—COOH, Ⓑ—OH, Ⓑ—COOH or Ⓑ—$NH_2$ and is described

in J. Porath, L., Sundberg, Nature (New Biology), 238, 261 (1972) and L., Sundberg, J. Porath, J. Chromatog., 90, 87 (1974).

The biochemical-bonded composite material can be used as a biocatalyst such as a bioreactor, an affinity-chromatographic filler, or an ion-chromatographic filler.

The present invention will be described in detail by way of examples.

Example 1

(A) 10 g of porous glass particles (Central Glass K.K.) having a mesh size of 125 to 200 and a pore size of 200 nm were washed with 100mℓ of 0.2N nitric acid twice, and the washed particles were added to 100mℓ of 0.2N nitric acid and treated at 80°C for 3 hours. The resultant glass particles were washed with 200 mℓ of distilled water five times. The washed particles were heated at 650°C for 12 hours. 150 mℓ of 10% toluene solution of γ-aminopropyltriethoxysilane were added to the heat-treated particles and reacted therewith under reflux for 12 hours. After the reaction, the glass particles were washed with 100 mℓ of acetone three times to prepare desired glass particles bonded with the silane coupling agent.

(B) 2 g of the glass particles bonded with the silane coupling agent was reacted with 20 mℓ of a 5% aqueous solution of glutaraldehyde at 25°C for an hour to bond the aldehyde group to the glass particles. The reacted glass particles were washed well with water and reacted with 40 mℓ of a 3% aqueous solution of polyethyleneimine (an average molecular weight of 70,000) at 25°C for 3 hours. After the reaction, the resultant particles were washed with a 0.01M phosphate buffer solution (PBS) (pH 7.5). 10 mℓ of 0.01M PBS and 20 mg of sodium borohydride were added to the particles and were reacted at 25°C for 3 hours to hydrogenate the unsaturated bond. The resultant particles were washed with water to prepare desired glass particles containing polyethyleneimine.

The pH stability of the glass particles containing only the silane coupling agent and prepared in process (A) and the glass particles prepared in process (B) were evaluated as follows.

4 mℓ of a solution prepared by diluting a 1% ethanol solution of fluorodinitrobenzene with a 0.005M aqueous solution of sodium hydrogen carbonate by 400 times were reacted with 0.1 g of a glass particle sample at room temperature for 24 hours. The supernatant solution was removed by suction, and the residue was washed with 4 mℓ of distilled water four times and 4 mℓ of ethanol once, so that the amino group on the glass particle sample was converted into dinitrobenzoyl.

Using a solution mixture of 0.04M barbital, 0.04M boric acid and 0.05M citric acid, and 0.12M sodium hydroxide or 0.12M hydrochloric acid, solutions having various pHs were prepared. The resultant solutions were poured on the glass particles obtained above in an amount of 1.5 mℓ each. The glass particles were allowed to stand at room temperature for 24 hours. Thereafter, the absorbance of the supernatant solution was measured at 420 nm to measure the amount of eluted dinitrobenzene and hence the amount of eluted amino group. Results are shown in Figs. 1 and 2. Fig. 1 shows the case of the glass particles bonded with only the silane coupling agent, and Fig. 2 shows the case of the glass particles of the present invention. As is apparent from Figs. 1 and 2, the glass particles of the present invention are stable in the full pH range of 1 to 12. In particular, stability in the range of pH 10 or more can be as good as that in other pH ranges although the conventional material is not stable in the range of pH 10 or more.

Example 2

10 g of porous glass particles CPG3000 #200 - #400 (available from Electro-Nucleonics Inc.) were washed with 100 mℓ of acetone three times and were dried at 80°C for 20 minutes. 20 mℓ of a 3% toluene solution of γ-glycidoxypropylmethyldiethoxysilane were added to the dried glass particles and reacted therewith at 25°C for an hour. After the supernatant solution was removed sufficiently, the residue was heated at 110°C for an hour, thereby obtaining desired glass particles bonded with epoxy-functional silane.

40 mℓ of a 3% solution of polyethyleneimine (average molecular weight of 40,000) in 0.01M PBS (pH 7.0) were added to 2 g of the glass particles and reacted therewith at 25°C for 6 hours. After the reaction, the glass particles were filtered and washed with water, thus preparing desired glass particles containing polyethyleneimine.

Following the same procedures as in Example 1, the pH stability of the glass particles was measured. The amount of eluted amino group was small as in the glass particles of Example 1 (B).

Stability of the glass particles prepared in Example 2 Example 1 (A) was evaluated as follows.

5 mℓ of water were added to 0.1 g of each of four glass particle samples, and the samples were allowed to stand at room temperature for 3, 7, 12, and 19 days, respectively. After the supernatant solution was removed from each sample, 1 mℓ of 4.5 mM amide black 10B in 0.1M sodium citrate-HCℓ buffer (pH 2.8) was added thereto to ionically bond amide black 10B to the amino group of each glass particle sample. Each reacted mixture was allowed to stand at room temperature for 30 minutes, and the solution was removed. The residue was washed with 10 mℓ of 0.05% Tween 80 aqueous solution five times. 3 mℓ of 0.1N NaOH were added to the washed sample to elute amide black 10B. The absorbance of each solution was measured at 630 nm, and the amount of amide black still bonded to the glass particles was calculated. Results are shown in Table 1 (the glass particles of Example 1 (A)) and Table 2 (the glass particles in Example 2) below:

Table 1

| Days | Content of Amide Black μmol/mℓ-gel |
|---|---|
| 0 | 4.24 |
| 3 | 2.65 |
| 7 | 2.19 |

Table 2

| Days | Content of Amide Black μmol/mℓ-gel |
|---|---|
| 0 | 16.09 |
| 12 | 16.23 |
| 19 | 14.69 |

The half of the total content of amide black is eluted from the conventional glass particles within 3 days.

However, only 10% or less of amide black is eluted from the glass particles of the present invention within 19 days, thus exhibiting high moisture resistance.

Example 3

0.3 g of the glass particles containing polyethyleneimine and prepared in Example 1 (B) was reacted with 5 mℓ of 5% glutaraldehyde at 25°C for an hour.

The resultant particles were sufficiently washed with water. 1.5 mℓ of 0.01M PBS (pH 7.5) containing an anti-human IgG monoclonal antibody (YAMASA MCA IgG-01) were added to the particles and reacted at 4°C for 8 hours to immobilize the anti-human IgG monoclonal antibody. 2mℓ of a 10% solution of gelatine in 0.1M PBS (ph 7.5) were added to the particles and reacted therewith at 4°C for 12 hours. The resultant particles were sufficiently washed with 0.1M PBS (pH 7.5). 2 m of 0.1M PBS (pH 7.5) and 5 mg of $NaBH_4$ were added to the washed particles and treated at 4°C for 5 hours. The particles were then washed with 0.01M Tris-HCℓ (pH 7.8) and a 0.01M NaCℓ solution to prepare an affinity-chromatographic carrier for human IgG separation.

The above carrier was filled in a column (an inner diameter of 2 mm and a length of 35 mm), and affinity chromatography was performed using 0.01M Tris-HCℓ (pH 7.8) and 0.15M NaCℓ as washing solutions and 0.1M glycine-HCℓ (pH 2.5) as a separating solution.

The sample used was a crude globulin solution fractionated by 40% ammonium sulfate from human serum.

Fig. 3 shows a chromatogram of the sample. Reference symbol PA represents a leakage peak of human IgG. In this case, elution peaks P1, P2, and P3 are kept unchanged.

Fig. 4 is a graph showing comparison between the properties of the affinity-chromatographic carrier prepared in Example 3 and and those of the carrier prepared by immobilizing the monoclonal antibody in the glass carrier as in process (A) in Example 1. The percentage of the elution amount (Pn) after the above repeated analysis with respect to an initial value (PI) of the amount of eluted human IgG is plotted along the ordinate. Curve a shows the case of the carrier according to the present invention, and curve b shows the case of the comparative example. As is apparent from the above results, when the carrier of the comparative example is used, the elution peak is lowered in response to an increase in the number of analysis cycles. However, when the carrier of the present invention is used, the initial value is maintained after 50 analysis cycles are completed. Therefore, the carrier according to the present invention is stabler and free from degradation of the efficiencies.

Example 4

0.5 g of the glass particles containing polyethyleneimine and prepared in Example 1 (B) and 2 mℓ of 1,4-butanediolglycidyl ether were reacted in 10 mℓ of 0.1M PBS (pH 8.0) at 25°C for 4 hours to bond the epoxide group to the glass particles.

2 mℓ of 0.1M PBS (pH 6.5) containing 1 mg/mℓ of glucose oxidase was reacted with the glass particles containing the epoxide group at 4°C for 12 hours to immobilize the glucose oxidase. The resultant glass particles were treated with 0.1M glycine ethyl ester to block the nonreacted epoxide group, thus preparing bioreactor particles.

The bioreactor particles were filled in a column having an inner diameter of 1.5 mm and a length of 10 mm and the column was set in a high-performance liquid chromatograph.

0.1M acetic acid-sodium acetate (pH 4.8) was used as a buffer. An electrochemical sensor was used as a sensor for detecting hydrogen peroxide. Samples containing glucose of a constant concentration were each injected in the column. The amount of hydrogen peroxide produced in the column was measured. Fig. 5 is a graph showing comparison between the properties of the bioreactor particles prepared in Example 4 and those of the bioreactor particles prepared by immobilizing the glucose oxidase on a glass carrier of Example 1 (A). The percentage of the amount (Pn) of detected hydrogen peroxide after the above repeated analysis with respect to an initial value (P1) of the amount of detected hydrogen peroxide is plotted along the ordinate. Curve a shows the case of the bioreactor according to the present invention, and curve b shows the case of the comparative example. As is apparent from the above results, when the bioreactor of

the comparative example is used, the detected peak is lowered in response to an increase in the number of analysis cycles. However, when the bioreactor of the present invention is used, 90% of the initial value is maintained after 350 analysis cycles are completed. Therefore, the bioreactor according to the present invention is stabler and free from degradation of the properties.

According to the present invention, as described above, a chemical composite carrier material having high moisture resistance can be provided.

## Claims

1. An insoluble chemical composite material, comprising:
a silicon dioxide-based carrier material; and
polyethyleneimine bonded to the carrier material by means of a silane coupling agent which is directly chemically bonded to the surface of the carrier material.

2. The material according to claim 1, characterized in that said carrier material is in the form of a particle, a fiber, or a tube.

3. The material according to claim 1, characterized in that said polyethyleneimine has an average molecular weight of 30,000 to 80,000.

4. The material according to claim 1, characterized in that said silane coupling agent comprises an epoxy-functional silane coupling agent, and the polyethyleneimine is directly bonded to the epoxy-functional silane coupling agent.

5. The material according to claim 4, characterized in that said epoxy-fuctional silane coupling agent is selected from the group consisting of β-(3,4-epoxycyclohexyl)ethyltrimethoxysilane, γ-glycidoxypropyltrimethoxysilane, and γ-glycidoxypropylmethyldiethoxysilane.

6. The material according to claim 1, characterized in that said silane coupling agent does not contain an epoxy group, and said polyethyleneimine is covalently bonded to a linking agent covalently bonded with the silane coupling agent.

7. The material according to claim 6, characterized in that said silane coupling agent comprises an amino-functional silane coupling agent.

8. The material according to claim 7, characterized in that said amino-functional silane coupling agent is selected from the group consisting of N-β-(aminoethyl)-γ-aminopropyltrimethoxysilane, N-β-(aminoethyl)-γ-aminopropylmethyldimethoxysilane, γ-aminopropyltriethoxysilane, and N-phenyl-γ-aminopropyltrimethoxysilane.

9. The material according to claim 7, characterized in that said linking agent comprises a dialdehyde compound.

10. The material according to claim 9, characterized in that said linking agent comprises glutaraldehyde.

11. The material according to claim 1, further comprising a biochemical bonded to an imino group and/or an amino group of said polyethyleneimine.

12. The material according to claim 11, characterized in that said biochemical is bonded to the imino group and/or the amino group through a second linking agent.

13. The material according to claim 12, characterized in that said second linking agent comprises a dialdehyde compound.

14. The material according to claim 13, characterized in that said dialdehyde compound comprises glutaraldehyde.

15. The material according to claim 12, characterized in that said second linking agent comprises a diepoxide compound.

16. The material according to claim 15, characterized in that said diepoxide compound comprises 1,4-butanedioldiglycidyl ether.

17. The material according to claim 12, characterized in that said biochemical comprises an anti-human IgG monoclonal antibody.

18. The material according to claim 12, characterized in that said biochemical comprises glucose oxidase.

19. The method of preparing an insoluble chemical composite material, comprising:

(a) treating a silicon dioxide-based carrier material with a silane coupling agent to bond the silane coupling agent to a surface of the carrier material;

(b) optionally, treating the carrier material with a linking agent to bond the linking agent to the silane coupling agent; and

(c) reacting the carrier material bonded with the silane coupling agent with polyethyleneimine to introduce the polyethyleneimine to the carrier material.

20. The method according to claim 19, characterized in that said carrier material is in the form of a particle, a fiber, or a tube.

21. The method according to claim 19, characterized in that said polyethyleneimine has an average molecular weight of 30,000 to 80,000.

22. The method according to claim 19, characterized in that said silane coupling agent comprises an epoxy-functional silane coupling agent, and said polyethyleneimine is directly and covalently bonded to the epoxy-functional silane coupling agent.

23. The method according to claim 22, characterized in that said epoxy-funtional silane coupling agent is selected from the group consisting of β-(3,4-epoxycyclohexyl)ethyltrimethoxysilane, γ-glycidoxypropyltrimethoxysilane, and γ-glycidoxypropylmethyldiethoxysilane.

24. The method according to claim 19, characterized in that said silane coupling agent does not contain an epoxy group, and the polyethyleneimine is covalently bonded to said linking agent covalently bonded with said silane coupling agent through the step (b).

25. The method according to claim 24, characterized in that said silane coupling agent comprises an amino-functional silane coupling agent.

26. The method according to claim 25, characterized in that said amino-functional silane coupling agent is selected from the group consisting of N-β-(aminoethyl)-γ-aminopropyltrimethoxysilane, N-β-(aminoethyl)-γ-aminopropylmethyldimethoxysilane, γ-aminopropyltriethoxysilane, and N-phenyl-γ-aminopropyltrimethoxysilane.

27. The method according to claim 26, characterized in that said linking agent comprises a dialdehyde compound.

28. The method according to claim 27, characterized in that said linking agent comprises glutaraldehyde.

FIG. 1

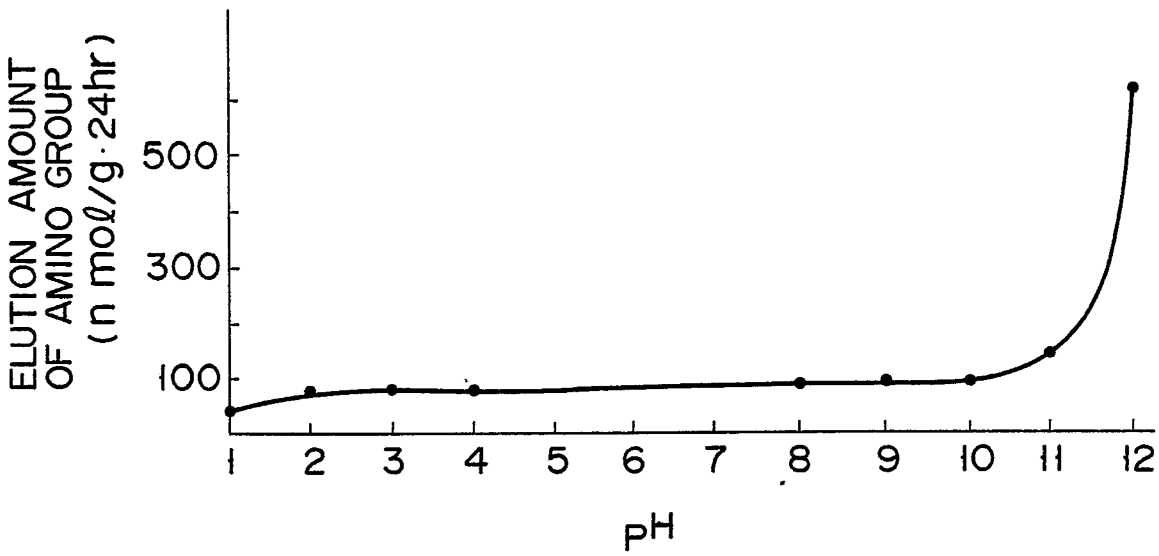
ELUTION AMOUNT
OF AMINO GROUP
(n mol/g·24hr)
500
300
100
1
2
3
4
5
6
7
8
9
10
11
12
pH

FIG. 2

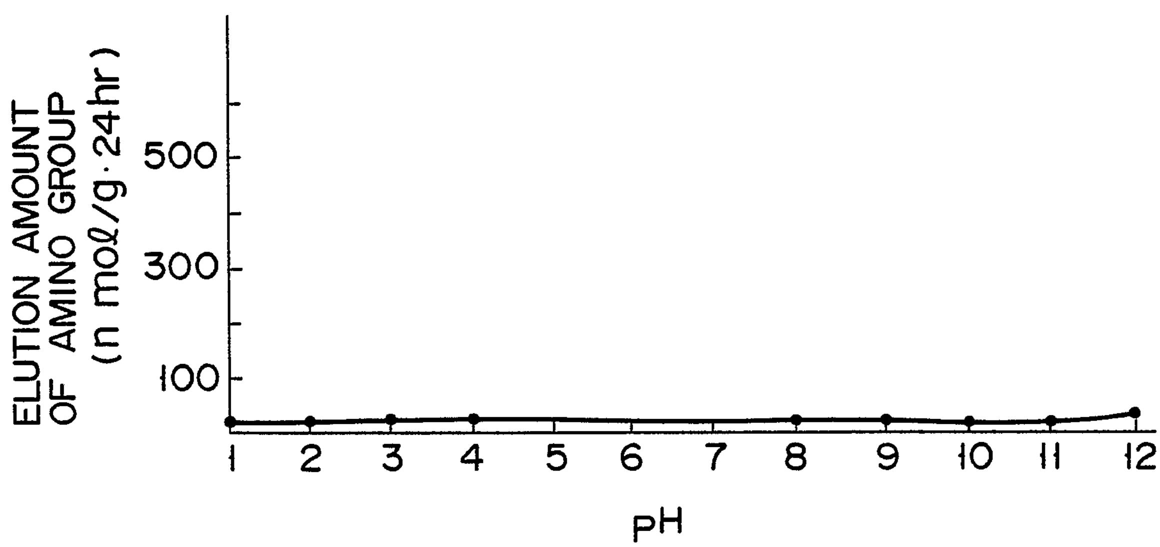
ELUTION AMOUNT
OF AMINO GROUP
(n mol/g·24hr)
500
300
100
1
2
3
4
5
6
7
8
9
10
11
12
pH

F I G. 3

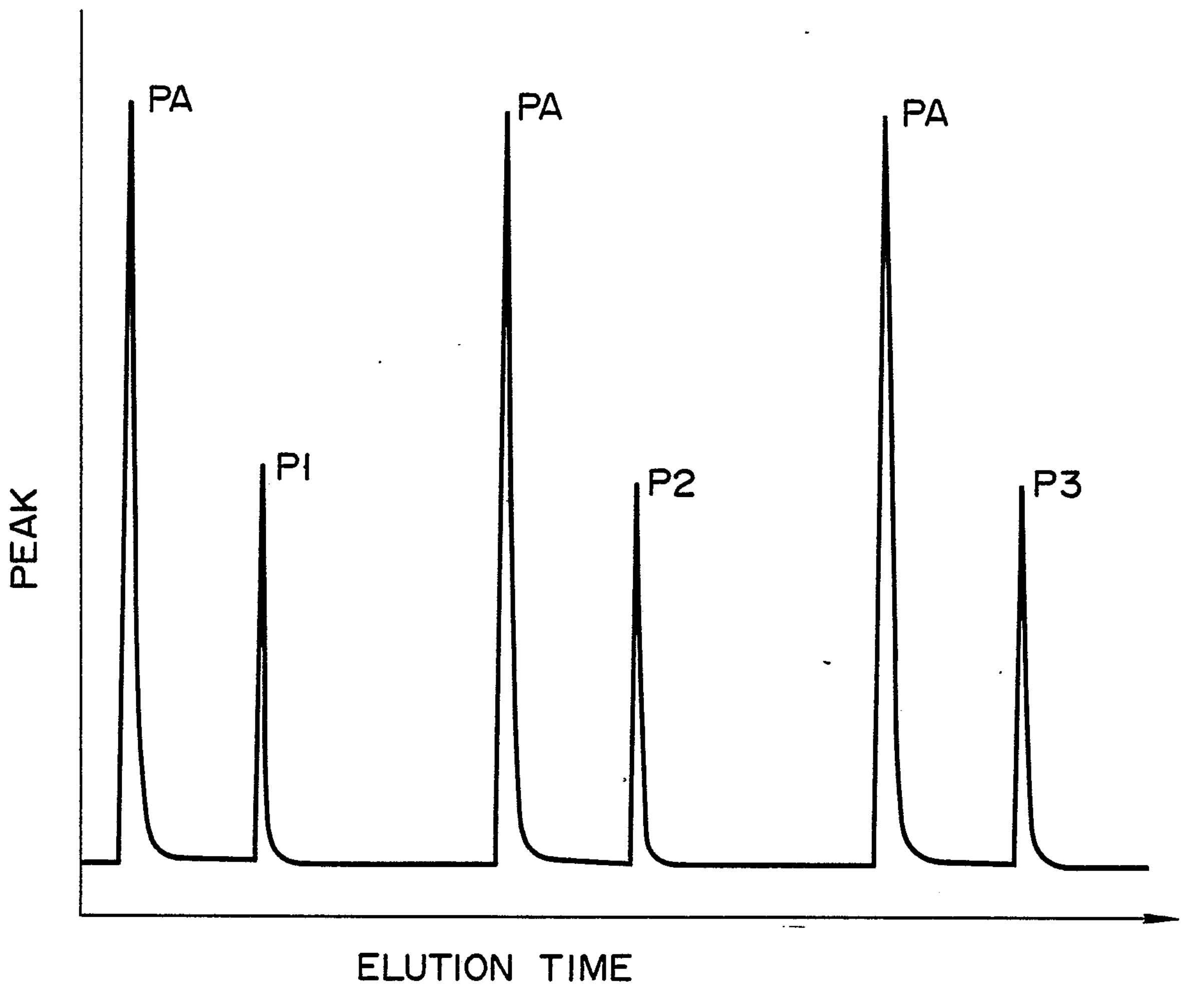

FIG. 4

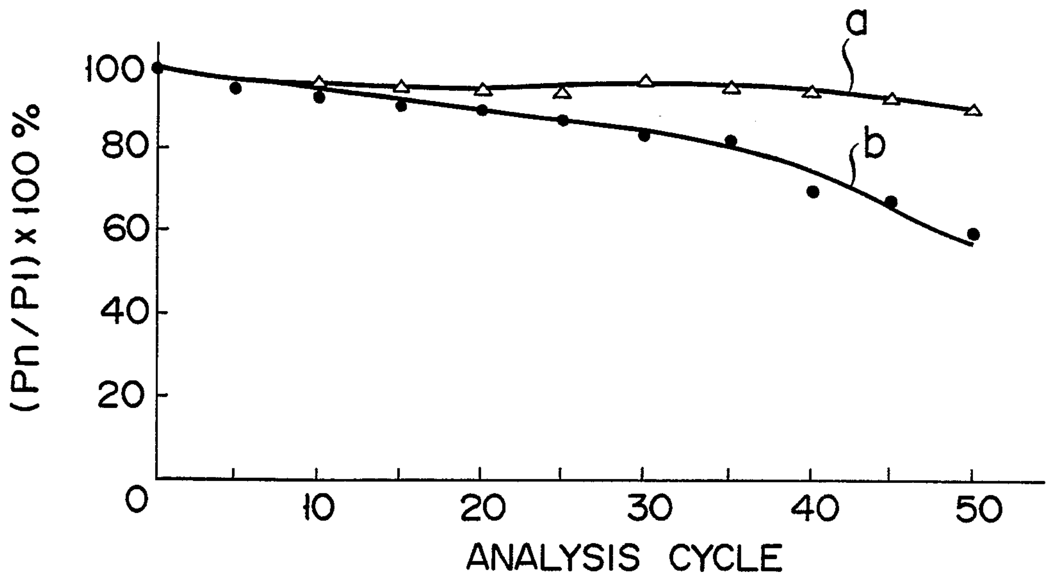
a
b
100
80
60
40
20
0
10
20
30
40
50
(Pn/P1) x 100 %
ANALYSIS CYCLE

FIG. 5

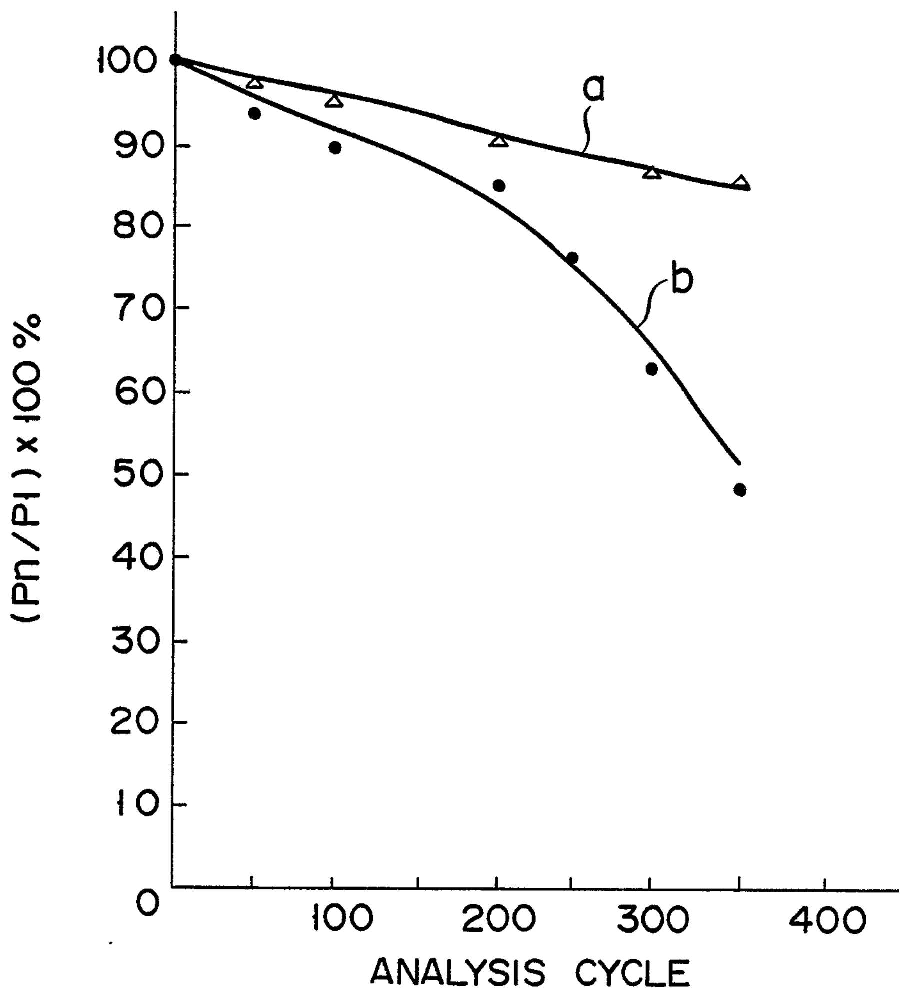
a
b
100
90
80
70
60
50
40
30
20
10
0
100
200
300
400
(Pn/P1) x 100 %
ANALYSIS CYCLE